# EUROPEAN PATENT SPECIFICATION

(11) **EP 1 916 879 B1**
(45) Date of publication and mention of the grant of the patent: **02.09.2009**
(21) Application number: 06291643.2
(22) Date of filing: 23.10.2006
(51) Int. Cl.: H05B 33/08

(54) **Secure opto-electronic failure detection of high power LEDs**
Sichere opto-elektronische Ausfallerkennung für Hochleistungsleuchtdioden
Détection de défaillance secure pour des LED à puissance elevée

(43) Date of publication of application: 30.04.2008
(73) Proprietor: Alcatel Lucent, 75008 Paris (FR)
(72) Inventor: Telefont, Heinz, 3500 Krems-Egelsee (AT)
(74) Representative: Kohler Schmid Möbus

(56) References cited:
- EP-A- 1 545 162
- WO-A-98/49872
- WO-A-20/04006404
- NL-C- 1 023 460
- US-A1- 2002 014 576
- US-A1- 2006 061 303

## Description

### Background of the invention

The invention relates to an electronic circuit for powering an LED (light emitting diode) signal lamp, in particular a railway signal lamp, adapted for detecting a failure of the LED signal lamp.

Such an electronic circuit is known from DE 198 41 490 A1, and from WO 98/49872.

In signalling technology, in particular with traffic lights and railway signal lamps, LEDs (light emitting diodes) have become popular for replacing conventional light bulbs: LED signal lamps are appreciated for their higher efficiency and longer life time than light bulbs.

In railway signal lamps, for example, a 12V / 35 W light bulb may be replaced with 12 high power LEDs, forming an LED signal lamp. The LEDs are usually equipped with special mirror and lens systems.

In order to provide a reliable signalling, it is necessary to survey the proper functioning of the LED signal lamp resp. its LEDs, and to register any failure immediately. Upon registration of a failure, a repair team can be dispatched to replace or fix broken LEDs.

From DE 198 41 490 A1, it is known to have a zener diode in parallel to each LED of a plurality of LEDs of a signal lamp connected in series. When an LED fails, it is assumed that an increased voltage drop occurs across a corresponding zener diode, what is detected by a comparator circuit and registered at a status output.

This known solution works indirectly, and does not register an actual change of brightness of any LED. If an LED fails along with a drop of resistance, there is no increase in a voltage drop across the corresponding zener diode, and the defect is not properly registered. Moreover, the remaining LEDs may be damaged by a too high voltage.

The brightness of the LEDs of a signal lamp can be verified directly with a separate control circuit comprising photo detectors. In case of a significant brightness change, in particular brightness drop, the voltage supply of the LEDs may be actively disconnected with a relay in order to protect the LEDs. This concept, however, implies complex construction and is therefore rather expensive.

### Object of the invention

It is the object of the invention to introduce a circuit for powering an LED signal lamp which is simple in construction, allows a reliable detection of LED failures and offers good protection of the electronic circuit, in particular the remaining LEDs, in case of a failure of one of the LEDs of the LED signal lamp.

### Short description of the invention

This object is achieved, in accordance with the invention, by an electronic circuit as introduced in the beginning, comprising
- an LED unit, comprising a plurality of LEDs connected in series,
- a first transistor, connected in series with the LED unit, wherein the first transistor has a first control input, in particular a base or a gate,
- a photo detection subcircuit comprising at least one photo detection unit, wherein the photo detection subcircuit provides a voltage to the first control input in dependence of the illumination of the at least one photo detection unit by the LEDs of the LED unit,
- a start capacity connected in parallel to the first transistor,
- a signalling unit comprising a signalling means connected in series with a second transistor, wherein the second transistor has a second control input, in particular a base or a gate, connected to the start capacity.

The inventive electronic circuit is optically self-retaining: As long as the photo detection unit or units receive sufficient light, the first transistor is provided with sufficient voltage at its first control input to make the first transistor conductive, and the circuit powering the LED unit is closed. If the photo detection unit or units do not receive sufficient light (and preferably if any one detection unit does not receive sufficient light), the first transistor is no more provided with sufficient voltage to keep it conductive, and the LED unit is no more powered via the (non-conductive) first transistor. In this way, the LED unit can be switched off automatically in case of LED failures, in particular without any relays. In this way, the LED unit is protected from a too large voltage after LED failures. As soon as the first transistor becomes non-conductive, the starting capacitor is loaded, what in turn activates the signalling means, so the defect is also indicated.

The protection of the LED unit and the defect signalling are realized with few components, all of which are standard electronic equipment; therefore the inventive electronic circuit is inexpensive. The protection electronic does not need to rely on assumptions of failure types, but directly accesses the brightness of the LEDs. This makes the failure detection highly reliable. The inventive electronic circuit can easily be adapted to different LEDs and input voltages, for example by chosing the amount of LEDs and the value of the monitoring resistor properly. The series connection of the LEDs of the LED unit facilitates detection failure.

In the most simple construction, the inventive electronic circuit comprises only one photo detection unit, which receives light (typically scattered light) from all LEDs of the LED unit. In general, however, there are a number of photo detection units, each monitoring one or several LEDs. Typically, each LED of the LED unit is monitored by only one photo detection unit (but note that each photo detection unit may still monitor one or several LEDs then). Usually, a photo detection unit is realized as a photo transistor within the invention; however, in some cases a simple photo diode may be sufficient as photo detection unit.

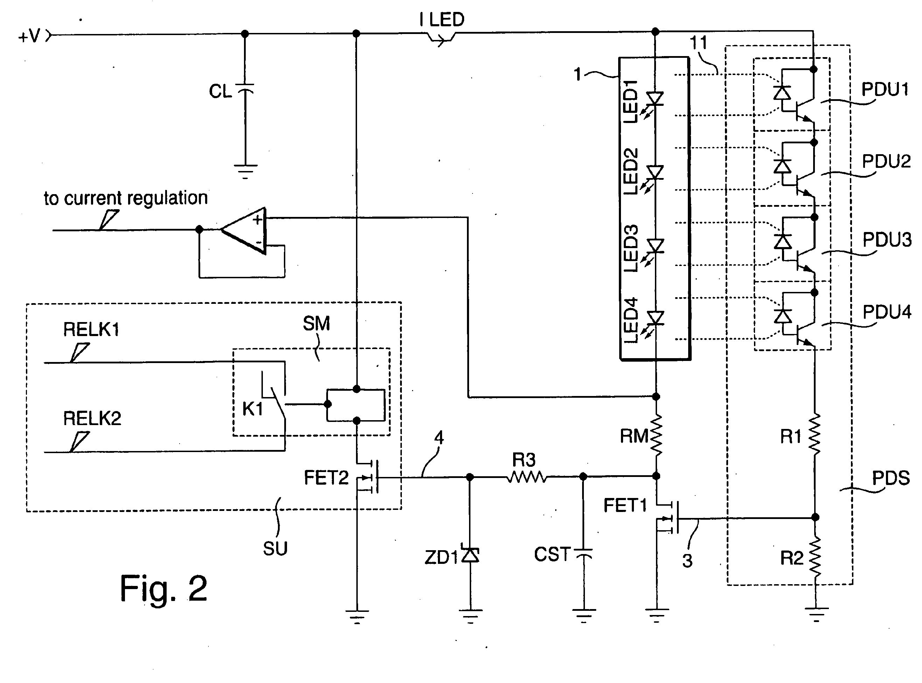

Preferably, the photo detection subcircuit is designed such that in case of a failure of any one LED belonging to any one photo detection unit, the voltage provided by the photo detection subcircuit falls below a critical level necessary to keep the first transistor conductive. For example, if the photo detection subcircuit is designed as a series connection of photo transistors monitoring one LED each (see Fig. 2), any LED failure will cause the voltage provided by the photo detection subcircuit fall to zero. This offers a maximum protection of the components of the electrical circuit, and in particular the remaining LEDs of the LED unit.

Also according to the invention, the photo detection subcircuit circuit may be designed such that in case of a failure of a certain percentage of the LEDs of the LED unit or a certain percentage of the LEDs monitored by any one photo detection unit, the photo detection subcircuit does no more provide sufficient voltage to the first transistor to keep it conductive. In this case, a minimum brightness level of the signal lamp is ensured, and an automatic switch-off of the LED unit and a signalling of the failures is done only if a certain brightness level of the LED unit or at any one photo detection unit is fallen short of. This may reduce the number of repair deployments.

When the first transistor has become non-conductive, the LED unit is disconnected from power. The resulting abrupt change in brightness copies the behaviour of a light bulb upon failure.

### Preferred variants of the invention

A preferred embodiment of the inventive electronic circuit provides that the photo detection subcircuit comprises a plurality of photo detection units connected in series, and that each photo detection unit monitors one or several of the LEDs of the LED unit. Alternative to a series connection, AND-gates may be used to connect the photo detection units. The series connection or AND-gate-connections ensure that the photo detection subcircuit provides the voltage necessary for making the first transistor conductive only if a minimum illumination is present at all photo detection units. This facilitates the detection of LED failures. With more photo detection units, the monitoring of the LEDs of the LED unit can be more detailed and exact. In particular, if for each LED one separate photo detection unit is used, the failure of a single LED can be detected with high reliability.

Another preferred embodiment of the inventive electronic circuit is characterized in that it comprises a voltage input, and that the LED unit, the photo detection subcircuit, and the signalling unit are connected in parallel to the voltage input, in particular wherein a loading capacitor is connected to the voltage input. The voltage input can be used to power all relevant components of the electronic circuit, making the construction simple. The loading capacitor smoothes a voltage supplied at the voltage input.

In an advantageous embodiment, the signalling means comprises a relay. The relay closes a circuit which indicates the detected failure, such as a warning light or tone at a distant control panel. The relay allows a potential separation.

A particularly preferred embodiment provides the photo detection subcircuit comprises a first resistor and a second resistor connected in series with the at least one photo detection unit, and that the first control input is connected between the first resistor and the second resistor. With the two resistors, an adequate potential for the first control input can be provided in a simple way.

Also preferred is an embodiment wherein the LED unit is connected to the first transistor and the starting capacitor via a monitoring resistor. At the monitoring resistor, the current I_{LED} through the LED unit may be measured by tapping the potential. The monitoring resistor can also be used to set the voltage across the LED unit, in particular to adapt to a particular number or type of LEDs of the LED unit.

In a further development of this embodiment, the LED unit is powered by a voltage controlled current source, and the voltage at the monitoring resistor is tapped to regulate the current through the LED unit. As a result, a constant current through the LED unit can be tuned in.

In another preferred embodiment of the invention, the second control input is connected to the starting capacitor via a third resistor, in particular wherein the second control input is connected to a protection diode. The third resistor adapts the voltage at the second control input. The zener diode protects the second transistor from high voltage, e.g. across gate-source.

Further preferred is an embodiment wherein the first transistor and/or the second transistor are field effect transistors, in particular MOSFETs. The MOSFETs have been proved in practice here.

Finally, in an advantageous embodiment of the electrical circuit, it comprises two control subcircuits connected in parallel, with each control subcircuit comprising a photo detection subcircuit, a first transistor, a starting transistor and a signalling unit. With this embodiment, is ensured that single component failures (such as short circuits or open connections) may not endanger the functioning of the electronic circuit.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a schematic diagram illustrating an inventive electric circuit, with one photo detection unit monitoring all LEDs of an LED unit;
- Fig. 2: shows a schematic diagram illustrating an inventive electric circuit, with a plurality of photo detection units, each monitoring one of the LEDs of an LED unit.

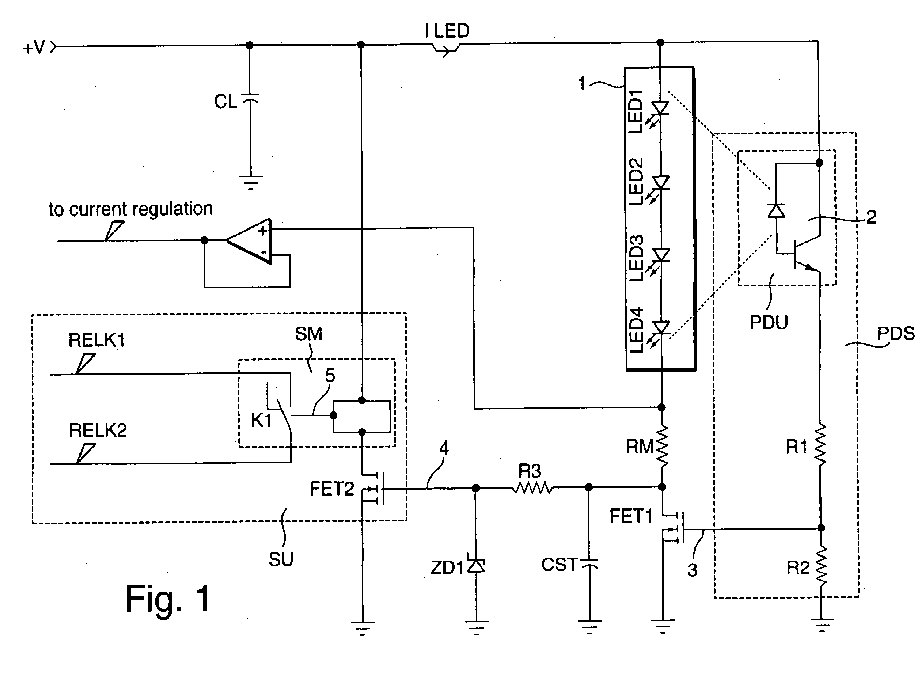

**Fig. 1** shows a circuit diagram of a first embodiment of an electronic circuit according to the invention.

The electronic circuit comprises an LED unit 1, which in turn comprises, in the example shown, four high power LEDs LED1-LED4 connected in series. Note that another preferred number of LEDs connected in series in an LED unit is twelve. The LED unit 1 is used as a signal lamp or part of a signal lamp; in the latter case, several electronic circuits according to the invention may be used in the same signal facility. The signal lamp may be a railway signal or part of a traffic light, for example.

The LED unit 1 is powered by a voltage input V+, where a DC voltage is provided, for example of +12 Volts (compared against earth). A loading capacitor CL is provided to smooth out high frequency interferences at the voltage input V+. The LED unit 1 is also switched on and off via the voltage input V+ (Alternatively, a separate switch may be provided e.g. between voltage input V+ and the contact of the loading capacitor CL).

The LED unit 1 is connected via a monitoring resistor RM to a start capacity CST. When the voltage at the voltage input V+ is switched on, the start capacitor CST short-circuits RM with earth for a short time, enough to make the LEDs LED1-LED4 of the LED unit 1 to shine for a moment. Some of the light generated by the LEDs LED1-LED4, typically some scattered light, is guided to and registered at a photo transistor 2 of a photo detection unit PDU, which is also connected to the voltage input V+. The incoming light makes the photo transistor 2 conductive, such that voltage drops occur across a first resistor R1 and a second resistor R2 connected in series with the photo detection unit PDU. The photo detection unit PDU, the first resistor R1 and the second resistor R2 form a photo detection subcircuit PDS.

The voltage across the second resistor R2 is tapped and fed into a first control input 3 of a first transistor FET1, which is chosen as a MOSFET (metal oxide field effect transistor) here, wherein the first control input 3 is the gate of the first transistor FET1. The voltage of second resistor R2 at the first control input 3 makes the first transistor FET1 conductive, such that a current I_{LED} through the LEDs LED1-LED4 can flow through the LED unit 1, the monitoring resistor RM and the first transistor FET1. The LEDs LED1-LED4 of the LED unit 1 may therefore continue to shine, even though the short time of short-circuiting of the monitoring resistor RM by the start capacity CST is over. The potential at the start capacity CST drops to earth level because of the conductive first transistor FET1 (As a consequence, the second transistor FET2 is non-conductive in the normal operation state).

If one or several of the LEDs LED1-LED4 fail, i.e. shine no more due to a defect, the brightness level at the photo transistor 2 drops, and as a consequence, the voltage across the second resistor R2 and at the first control input 3 drops. Note that the resulting voltage as a consequence of LED failures can be adjusted by choosing the first and second resistors R1, R2 properly. In the shown embodiment, R1 and R2 are chosen such that upon a failure of two of the LEDs LED1-LED4, the voltage at the first control input 3 is no more sufficient to keep the first transistor FET1 conductive. Therefore, when two (or more) of the LEDs LED1-LED4 fail, the first transistor FET1 becomes non-conductive and the power supply to LED unit 1 is broken as a whole.

In this case, i.e. when FET1 becomes non-conductive, the voltage at the start capacity CST rises, since it is loaded via the LED unit 1 and the monitoring resistor RM. In order to ensure this voltage rise even if one LED has become non-conductive at its failure, an additional resistor may be connected in parallel to the LED unit 1 (not shown).

Due to the rise of voltage at the starting capacitor CST, at a second control input 4 of a second transistor FET2 connected to the starting capacitor CST via a third resistor R3, a voltage increase occurs, enough to make the second transistor FET2 conductive. The second transistor FET2 is chosen here as a MOSFET, with the second control input 4 being the gate of FET2. The second transistor FET2 is protected by a zener diode ZD1.

The second transistor FET2 is part of a signaling unit SU, in which the second transistor FET2 is connected in series with a signaling means SM. The signaling unit SU is powered by the voltage input V+. When the second transistor FET2 becomes conductive, the signaling means SM is powered. In the embodiment shown, the signaling means SM is a relay. It comprises an electromagnet 5, powered via the second transistor FET2, and controlling a switching contact K1 of the relay. When the electromagnet 5 is not powered, the relay is kept open (e.g. with the aid of a spring), i.e. the relay contacts RELK1 and RELK2 are not connected. When the electromagnet 5 is powered via second transistor FET2, the relay contacts RELK1 and RELK2 are connected by the switching contact K1. A warning facility, such as warning light or a warning horn, can be activated in this way.

Across the monitoring resistor RM, a control voltage for the current control of the voltage input V+ is tapped. The current control establishes a constant current I_{LED}. Note that the current control would, in case of an LED failure, possibly register a drop of voltage at the monitoring resistor RM, and increase the voltage at the voltage input V+, what would endanger the electronic circuit. However, danger is avoided with the invention by switching off the LED unit 1 via the non-conductive first transistor FET1.

To ensure in practice that failures of single components (short-circuiting or open connections) cannot make the electric circuit useless, the electric circuit may be provided in two-channel design, with relevant components provided in double or combined with other control circuits.

**Fig. 2** shows an second embodiment of the inventive electrical circuit. It works rather similar as the first embodiment, so only the differences are explained in detail.

In the embodiment shown, the photo detection subcircuit PDS comprises four photo detection units PDU1-PDU4, all connected in series. The photo detection units PDU1-PDU4 are realized by photo transistors each. Each PDU1-PDU4 monitors the brightness of one LED1-LED4, with PDU1 monitoring LED1, PDU2 monitoring PDU2 and so on. Some scattered light of each LED1-LED4 is guided to its corresponding photo detection unit PDU1-PDU4 by a guiding means 11, which at the same time shadows all other LEDs from this photo detection unit.

Only if all photo detection units PDU1-PDU4 receive light from their corresponding LED1-LED4, the series connection of the photo detection units PDU1-PDU4 becomes conductive such that a voltage can be tapped at the second resistor R2. Else, i.e. if one or more LEDs fail, at least one of the photo transistor is non-conducting, and no voltage is present at the second resistor R2, such that the first transistor FET1 becomes non-conductive.

In this embodiment, the failure of a single LED can be registered with high reliability.

## Claims

1. Electronic circuit for powering an LED (light emitting diode) signal lamp, in particular a railway signal lamp, adapted for detecting a failure of the LED signal lamp,
comprising
- an LED unit (1), comprising a plurality of LEDs (LED1-LED4) connected in series,
- a first transistor (FET1), connected in series with the LED unit (1), wherein the first transistor (FET1) has a first control input (3), in particular a base or a gate,
- a photo detection subcircuit (PDS) comprising at least one photo detection unit (PDU, PDU1-PDU4), wherein the photo detection subcircuit (PDS) provides a voltage to the first control input (3) in dependence of the illumination of the at least one photo detection unit (PDU, PDU1-PDU4) by the LEDs (LED1-LED4) of the LED unit (1), **characterized by**
- a start capacity (CST) connected in parallel to the first transistor (FET1),
- a signalling unit (SU) comprising a signalling means (SM) connected in series with a second transistor (FET2), wherein the second transistor (FET2) has a second control input (4), in particular a base or a gate, connected to the start capacity (CST).

2. Electronic circuit according to claim 1, **characterized in that** the photo detection subcircuit (PDS) comprises a plurality of photo detection units (PDU, PDU1-PDU4) connected in series, and that each photo detection unit (PDU, PDU1-PDU4) monitors one or several of the LEDs (LED1-LED4) of the LED unit (1).

3. Electronic circuit according to claim 1, **characterized in that** it comprises a voltage input (+V), and that the LED unit (1), the photo detection subcircuit (PDS), and the signalling unit (SU) are connected in parallel to the voltage input (+V), in particular wherein a loading capacitor (CL) is connected to the voltage input (V+).

4. Electronic circuit according to claim 1, **characterized in that** the signalling means (SM) comprises a relay.

5. Electronic circuit according to claim 1, **characterized in that** the photo detection subcircuit (PDS) comprises a first resistor (R1) and a second resistor (R2) connected in series with the at least one photo detection unit (PDU, PDU1-PDU4), and that the first control input (3) is connected between the first resistor (R1) and the second resistor (R2).

6. Electrical circuit according to claim 1, **characterized in that** the LED unit (1) is connected to the first transistor (FET1) and the starting capacitor (CST) via a monitoring resistor (RM).

7. Electrical circuit according to claim 6, **characterized in that** the LED unit (1) is powered by a voltage controlled current source, and the voltage at the monitoring resistor (RM) is tapped to regulate the current (I_{LED}) through the LED unit (1).

8. Electrical circuit according to claim 1, **characterized in that** the second control input (4) is connected to the starting capacitor (CST) via a third resistor (R3), in particular wherein the second control input (4) is connected to a protection diode (ZD1).

9. Electrical circuit according to claim 1, **characterized in that** the first transistor (FET1) and/or the second transistor (FET2) are field effect transistors, in particular MOSFETs.

10. Electrical circuit according to claim 1, **characterized in that** it comprises two control subcircuits connected in parallel, with each control subcircuit comprising a photo detection subcircuit (PDS), a first transistor (FET1), a starting transistor (CST) and a signalling unit (SU).

## Patentansprüche

1. Elektronischer Schaltkreis zum Versorgen einer LED-(Leuchtdioden)-Signallampe, insbesondere einer Eisenbahnsignallampe, die zum Detektieren des Ausfalls der LED-Signallampe ausgestaltet ist, umfassend :
- eine LED-Einheit (1), umfassend eine Vielzahl an in Serie geschalteter LEDs (LED1-LED4),
- einen ersten Transistor (FET1), der mit der LED-Einheit (1) in Serie geschaltet ist, wobei der erste Transistor (FET1) einen ersten Steuereingang (3), insbesondere eine Basis bzw. ein Gate aufweist,
- einen Photodetektions-Nebenschaltkreis (PDS), umfassend zumindest eine Photodetektions-Einheit (PDU, PDU1-PDU4), wobei der Photodetektions-Nebenschaltkreis (PDS) in Abhängigkeit von der Beleuchtungsstärke der zumindest einen Photodetektions-Einheit (PDU, PDU1-PDU4) durch die LEDs (LED1-LED4) der LED-Einheit (1) den ersten Steuereingang (3) mit einer Spannung versieht,
**gekennzeichnet durch**
- eine zu dem ersten Transistor (FET1) parallel geschaltete Startkapazität (CST),
- eine Signaleinheit (SU), die eine mit einem zweiten Transistor (FET2) in Reihe geschaltete Signalvorrichtung (SM) umfasst, wobei der zweite Transistor (FET2) einen zweiten Steuereingang (4), insbesondere eine Basis bzw. ein Gate aufweist, der mit der Startkapazität (CST) verschalten ist.

2. Elektronischer Schaltkreis nach Anspruch 1, **dadurch gekennzeichnet, dass** der Photodetektions-Nebenschaltkreis (PDS) eine Vielzahl an in Serie geschalteter Photodetektions-Einheiten (PDU, PDU1, PDU4) umfasst und dass jede Photodetektions-Einheit (PDU, PDU1-PDU4) eine oder mehrere der LEDs (LED1-LED4) der LED-Einheit (1) überwacht.

3. Elektronischer Schaltkreis nach Anspruch 1, **dadurch gekennzeichnet, dass** er einen Spannungseingang (+V) umfasst und dass die LED-Einheit (1), der Photodetektions-Nebenschaltkreis (PDS) und die Signaleinheit (SU) mit dem Spannungseingang (+V) parallel geschaltet sind, insbesondere wobei ein Ladekondensator (CL) mit dem Spannungseingang (V+) verschalten ist.

4. Elektronischer Schaltkreis nach Anspruch 1, **dadurch gekennzeichnet, dass** die Signalvorrichtung (SM) ein Relais umfasst.

5. Elektronischer Schaltkreis nach Anspruch 1, **dadurch gekennzeichnet, dass** der Photodetektions-Nebenschaltkreis (PDU) einen ersten Widerstand (R1) und einen zweiten Widerstand (R2) umfasst, die in Serie mit der zumindest einen Photodetektions-Einheit (PDU, PDU1-PDU4) geschaltet sind, und dass der erste Steuereingang (3) zwischen dem ersten Widerstand (R1) und dem zweiten Widerstand (R2) verschalten ist.

6. Elektronischer Schaltkreis nach Anspruch 1, **dadurch gekennzeichnet, dass** die LED-Einheit (1) über einen Überwachungswiderstand (RM) mit dem ersten Transistor (FET1) und dem Startkondensator (CST) verschalten ist.

7. Elektronischer Schaltkreis nach Anspruch 6, **dadurch gekennzeichnet, dass** die LED-Einheit (1) von einer spannungsgesteuerten Stromquelle aus versorgt wird und die Spannung an dem Überwachungswiderstand (RM) abgegriffen wird, um den Strom (I_{LED}) durch die LED-Einheit (1) zu regeln.

8. Elektronischer Schaltkreis nach Anspruch 1, **dadurch gekennzeichnet, dass** der zweite Steuereingang (4) mit dem Startkondensator (CST) über einen dritten Widerstand (R3) verschalten ist, insbesondere wobei der zweite Steuereingang (4) mit einer Schutzdiode (ZD1) verschalten ist.

9. Elektronischer Schaltkreis nach Anspruch 1, **dadurch gekennzeichnet, dass** es sich bei dem ersten Transistor (FET1) und/oder dem zweiten Transistor (FET2) um Feldeffekt-Transistoren handelt, insbesondere MOSFETs.

10. Elektronischer Schaltkreis nach Anspruch 1, **dadurch gekennzeichnet, dass** er zwei parallel geschaltete Steuer-Nebenschaltkreise umfasst, wobei jeder Steuer-Nebenschaltkreis einen Photodetektions-Nebenschaltkreis (PDS), einen ersten Transistor (FET1), einen Starttransistor (CST) und eine Signaleinheit (SU) umfasst.

## Revendications

1. Circuit électronique destiné à alimenter une lampe de signalisation à LED (diodes électroluminescentes), en particulier une lampe de signalisation de chemin de fer, conçu pour détecter une défaillance de la lampe de signalisation à LED,
le circuit électronique comprenant :
- un module (1) à LED comprenant une pluralité de LED (LED1-LED4) montées en série,
- un premier transistor (FET1) monté en série avec le module (1) à LED, le premier transistor (FET1) possédant une première entrée de commande (3), en particulier une base ou une grille,
- un sous-circuit de photodétection (PDS) comprenant au moins un module de photodétection (PDU, PDU1-PDU4), le sous-circuit de photodétection (PDS) délivrant une tension à la première entrée de commande (3) dépendant de l'illumination dudit au moins un module de photodétection (PDU, PDU1-PDU4) par les LED (LED1-LED4) du module (1) à LED,
le circuit électronique étant **caractérisé par** :
- un condensateur de démarrage (CST) monté en parallèle avec le premier transistor (FET1),
- un module de signalisation (SU) comprenant un moyen de signalisation (SM) monté en série avec un deuxième transistor (FET2), le deuxième transistor (FET2) possédant une deuxième entrée de commande (4), en particulier une base ou une grille, raccordée au condensateur de démarrage (CST).

2. Circuit électronique selon la revendication 1, **caractérisé en ce que** le sous-circuit de photodétection (PDS) comprend une pluralité de modules de photodétection (PDU, PDU1-PDU4) montés en série, et **en ce que** chaque module de photodétection (PDU, PDU1-PDU4) contrôle une ou plusieurs des LED (LED1-LED4) du module (1) à LED.

3. Circuit électronique selon la revendication 1, **caractérisé en ce qu'**il comprend une entrée de tension (+V), et **en ce que** le module (1) à LED, le sous-circuit de photodétection (PDS) et le module de signalisation (SU) sont montés en parallèle avec l'entrée de tension (+V), un condensateur de charge (CL) étant en particulier raccordé à l'entrée de tension (V+).

4. Circuit électronique selon la revendication 1, **caractérisé en ce que** le moyen de signalisation (SM) comprend un relais.

5. Circuit électronique selon la revendication 1, **caractérisé en ce que** le sous-circuit de photodétection (PDS) comprend une première résistance (R1) et une deuxième résistance (R2) montées en série avec ledit au moins un module de photodétection (PDU, PDU1-PDU4), et **en ce que** la première entrée de commande (3) est raccordée entre la première résistance (R1) et la deuxième résistance (R2).

6. Circuit électrique selon la revendication 1, **caractérisé en ce que** le module (1) à LED est raccordé au premier transistor (FET1) et au condensateur de démarrage (CST) par l'intermédiaire d'une résistance de contrôle (RM).

7. Circuit électrique selon la revendication 6, **caractérisé en ce que** le module (1) à LED est alimenté par une source de courant commandée en tension, et **en ce que** la tension aux bornes de la résistance de contrôle (RM) est prélevée dans le but de réguler le courant (I_{LED}) traversant le module (1) à LED.

8. Circuit électrique selon la revendication 1, **caractérisé en ce que** la deuxième entrée de commande (4) est raccordée au condensateur de démarrage (CST) par l'intermédiaire d'une troisième résistance (R3), la deuxième entrée de commande (4) étant en particulier raccordée à une diode de protection (ZD1).

9. Circuit électrique selon la revendication 1, **caractérisé en ce que** le premier transistor (FET1) et/ou le deuxième transistor (FET2) sont des transistors à effet de champ, en particulier des MOSFET.

10. Circuit électrique selon la revendication 1, **caractérisé en ce qu'**il comprend deux sous-circuits de commande montés en parallèle, chaque sous-circuit de commande comprenant un sous-circuit de photodétection (PDS), un premier transistor (FET1), un transistor de démarrage (CST) et un module de signalisation (SU).
